# EUROPÄISCHE PATENTSCHRIFT

(11) **EP 1 836 681 B1**
(45) Veröffentlichungstag und Bekanntmachung des Hinweises auf die Patenterteilung: **22.04.2009**
(21) Anmeldenummer: 05823954.2
(22) Anmeldetag: 23.12.2005
(51) Int. Cl.: G06T 7/20

(54) **VERFAHREN ZUR BESTIMMUNG DER EIGENBEWEGUNG EINES FAHRZEUGS**
METHOD FOR DETERMINING THE DISPLACEMENT OF A VEHICLE
PROCEDE POUR DETERMINER LE MOUVEMENT PROPRE D'UN VEHICULE

(30) Priorität: 04.01.2005 DE 102005000651
(43) Veröffentlichungstag der Anmeldung: 26.09.2007
(73) Patentinhaber: ROBERT BOSCH GMBH, 70442 Stuttgart (DE)
(72) Erfinder: WUERZ-WESSEL, Alexander, 70599 Stuttgart (DE); STEIN, Fridtjof, 73760 Ostfildern (DE)
(86) Internationale Anmeldenummer: PCT/EP2005/057161
(87) Internationale Veröffentlichungsnummer: WO 2006/072555

(56) Entgegenhaltungen:
- GIACHETTI A ET AL: "THE USE OF OPTICAL FLOW FOR ROAD NAVIGATION" IEEE TRANSACTIONS ON ROBOTICS AND AUTOMATION, IEEE INC, NEW YORK, US, Bd. 14, Nr. 1, 1. Februar 1998 (1998-02-01), Seiten 34-48, XP000739010 ISSN: 1042-296X
- GEHRIG S K ET AL: "Dead reckoning and cartography using stereo vision for an autonomous car" INTELLIGENT ROBOTS AND SYSTEMS, 1999. IROS '99. PROCEEDINGS. 1999 IEEE/RSJ INTERNATIONAL CONFERENCE ON KYONGJU, SOUTH KOREA 17-21 OCT. 1999, PISCATAWAY, NJ, USA,IEEE, US, Bd. 3, 17. Oktober 1999 (1999-10-17), Seiten 1507-1512, XP010362318 ISBN: 0-7803-5184-3
- SMITH S M: "ASSET-2: REAL-TIME MOTION SEGMENTATION AND OBJECT TRACKING" REAL-TIME IMAGING, ACADEMIC PRESS LIMITED, GB, Bd. 4, Nr. 1, Februar 1998 (1998-02), Seiten 21-40, XP000740706 ISSN: 1077-2014
- SHI J ET AL: "GOOD FEATURES TO TRACK" PROCEEDINGS OF THE COMPUTER SOCIETY CONFERENCE ON COMPUTER VISION AND PATTERN RECOGNITION. SEATTLE, JUNE 21 - 23, 1994, LOS ALAMITOS, IEEE COMP. SOC. PRESS, US, 21. Juni 1994 (1994-06-21), Seiten 593-600, XP000515898 ISBN: 0-8186-5827-4

## Beschreibung

Die Erfindung betrifft ein Verfahren zur Bestimmung der Eigenbewegung eines Fahrzeugs in einer Umgebung gemäß dem Oberbegriff des Anspruchs 1 sowie eine Vorrichtung zur Durchführung eines Verfahrens zur Bestimmung der Eigenbewegung eines Fahrzeugs in einer Umgebung gemäß dem Oberbegriff des Anspruchs 14.

### Stand der Technik

Verfahren zur Bestimmung der Eigenbewegung eines Fahrzeugs sind bekannt. Verfahren dieser Art sind dem Themengebiet des "sehenden Autos" zuzuordnen, wenngleich diese Verfahren prinzipiell bei den verschiedensten Fahrzeugtypen eingesetzt werden können. Grundlage dieser Verfahren ist es, die Umgebung, in der sich das Fahrzeug bewegt, mittels bildgebender Verfahren aufzunehmen und rechnerisch zu verarbeiten. Anhand der Auswertung der Bilddaten wird die Umgebung einschließlich der darin befindlichen Objekte ausgewertet und der Fahrer des Fahrzeugs mit zusätzlichen Daten versorgt, zum Beispiel bezüglich eines Auftretens von Hindernissen oder einer Annäherung von anderen Fahrzeugen. Um die Bilddaten hinsichtlich solcher Informationen auswerten zu können, die für den Fahrer und sein Fahrverhalten wichtig sind, ist es unter Anderem von Bedeutung die Bilddaten bezüglich einer momentanen Fahrtrichtung des Fahrzeugs auszuwerten. Dabei wird regelmäßig ein Punkt oder ein Bereich einer mittels einer Bildgebungsvorrichtung erzeugten Momentaufnahme ermittelt, auf den das Fahrzeug zuzusteuern scheint. Dieser Punkt beziehungsweise Bereich wird als Zentrum der Ausbreitung (Focus of Expansion, FOE) bezeichnet. Es handelt sich dabei um die Projektion der Bewegungsrichtung der Kamera auf die Bildebene. Da die Momentaufnahme nur einen Teil der Umgebung zeigt, muss das Zentrum der Ausbreitung nicht notwendigerweise innerhalb des Bildausschnitts der Momentaufnahme liegen. So liegt zum Beispiel bei einer rotatorischen Bewegung das Zentrum der Ausbreitung im Unendlichen in der entsprechenden Bewegungsrichtung der Rotation. Um das Zentrum der Ausbreitung zu ermitteln, wird unter anderem der optische Fluss von ausgewählten (oder allen) Bildpunkten der Momentaufnahmen zwischen zwei zeitlich voneinander beabstandet aufgenommenen Momentaufnahmen bestimmt. Vereinfacht gesagt bedeutet dies, dass ermittelt wird, in welche Richtung und um welchen Betrag sich Bildpunkte im Laufe der Zeit bewegen. Der optische Fluss eines Bildpunktes kann also im Sinne eines Bewegungsvektors verstanden werden. Bedeutsam für die Bestimmung des Zentrums der Ausbreitung sind dabei sogenannte stationäre Punkte, das heißt Punkte oder Strukturen (Bildmerkmale), die sich in aufeinanderfolgenden Momentaufnahmen nicht bewegen. Der optische Fluss solcher Punkte ist null, nahezu null oder liegt unterhalb eines definierten Schwellenwerts. Stationäre Punkte können dadurch entstehen, dass die beobachteten Strukturen so weit von der Bildgebungseinrichtung entfernt sind, dass die relative Bewegung vernachlässigbar ist (Hintergrundstrukturen). Ferner können sich stationäre Punkte dadurch ergeben, dass sich ein beobachtetes Objekt relativ zur Kamera nicht bewegt, wie dies beispielsweise bei Teilen des eigenen Fahrzeugs oder einem mit gleicher Fahrtrichtung und Geschwindigkeit vorausfahrendem Fahrzeug der Fall ist. Insbesondere im Straßenverkehr ist es selten gegeben, dass diese stationären Punkte über einen längeren Zeitraum auch tatsächlich als stationär gegeben sind, da beispielsweise das Fahrzeug abbiegt, das bislang konstant vorausgefahrene Fahrzeug beschleunigt oder bremst oder ein in der Ferne lokalisierter stationärer Punkt durch ein einscherendes Fahrzeug verdeckt wird.

Ein solches Verfahren nach dem Stand der Technik wird beispielsweise von Giachetti, Campani und Torre in dem Aufsatz "Use of optical flow for road navigation", IEEE Transactions on Robotics and Automation, Februar 1998, Seiten 34 - 48 beschrieben.

Verfahren gemäß dem Stand der Technik lassen hier den Wunsch offen, insbesondere in sich schnell verändernden Umgebungen, zuverlässig und schnell die Eigenbewegung des Fahrzeugs zu ermitteln.

### Vorteile der Erfindung

Erfindungsgemäß wird der Stand der Technik dahingehend weitergebildet, dass anhand eines ersten Algorithmus neue Referenzpunkte (stationäre Punkte) der Beobachtungsmenge dynamisch hinzugefügt werden und anhand eines zweiten Algorithmus bestehende Referenzpunkte aus der Beobachtungsmenge dynamisch entfernt werden. Dies bedeutet, dass die Beobachtungsmenge hinsichtlich der enthaltenen Referenzpunkte ständig an die sich ändernden Umgebungsbedingungen angepasst wird. Anhand eines ersten Algorithmus werden Bildpunkte dahingehend untersucht, ob sie die Kriterien eines stationären Punktes erfüllen, das heißt ob sie als Referenzpunkt in die Beobachtungsmenge aufgenommen werden sollen. Anhand eines zweiten Algorithmus wird festgestellt, ob bestimmte Referenzpunkte die Kriterien eines stationären Punktes nicht mehr erfüllen und aus der Beobachtungsmenge entfernt werden sollen. Dabei handelt es sich um ein dynamisches Verfahren, das heißt die Überprüfung von Bildpunkten und Referenzpunkten sowie die Anpassung der Beobachtungsmenge kann kontinuierlich stattfinden, sodass auch in einer sich schnell ändernden Umgebung stets eine Beobachtungsmenge mit aktuellen Referenzpunkten zur Verfügung steht. In Hinblick auf die genannten Kriterien sei bereits an dieser Stelle darauf hingewiesen, dass eine Überprüfung der Kriterien regelmäßig unter Berücksichtigung statistischer Aspekte und/oder unter Einbeziehung von Schwellenwerten stattfinden wird.

Vorteilhafterweise schließt der erste Algorithmus Schritte ein zur Ermittlung von Bildpunkten deren optischer Fluss null oder nahezu null ist. Dabei kann sich die Überprüfung des optischen Flusses auf alle Punkte oder lediglich auf ausgewählte Bildpunkte erstrecken. Wird ein Bildpunkt mit einem optischen Fluss ermittelt, der null oder nahezu null ist, so kann angenommen werden, dass es sich dabei um einen stationären Punkt handelt. Der Bildpunkt wird dann als Referenzpunkt in die Beobachtungsmenge aufgenommen. Bei der Bestimmung, ob ein Bildpunkt stationär ist oder nicht, wird bevorzugt ein Schwellenwert eingesetzt, damit nicht nur solche Bildpunkte erkannt werden, deren optischer Fluss exakt null ist, sondern auch Bildpunkte deren optischer Fluss in etwa null ist. Ein für die jeweilige Applikation geeigneter Schwellenwert ist für den Fachmann anhand von Versuchen leicht auffindbar.

Bei einer vorteilhaften Ausgestaltung der Erfindung schließt der erste Algorithmus Schritte ein zur Ermittlung von Bildpunkten deren optischer Fluss dem optischen Fluss entspricht, der bei einer Mehrzahl von Referenzpunkten ermittelt wurde. Es wurde erkannt, dass ein Indiz für einen stationären Punkt auch dann vorliegt, wenn ein Bildpunkt einen optischen Fluss aufweist, der dem Fluss bei einer Mehrzahl von Referenzpunkten, also bereits ermittelten stationären Punkten, entspricht. Damit wird es auch möglich in schwierigen Situationen, in denen sich keine Bildpunkte mit einem optischen Fluss von null ergeben, neue Referenzpunkte zu ermitteln. Die Mehrzahl von Referenzpunkten, deren optischer Fluss mit dem des Bildpunktes verglichen wird, lässt sich auf verschiedene Arten realisieren. So wird erfindungsgemäß insbesondere vorgeschlagen, die größte Menge von örtlich zusammenhängend positionierten Referenzpunkten zu betrachten, die Anzahl der benötigten Referenzpunkte als Prozentsatz der Gesamtheit der Referenzpunkte zu beschreiben oder mittels mathematischer, insbesondere statistischer Verfahren signifikante Referenzpunkte oder Mengen von Referenzpunkten zu bestimmen. Auch hier ist es nicht erforderlich, dass der optische Fluss des betrachteten Bildpunktes mit dem optischen Fluss der gewählten Referenzpunkte exakt übereinstimmt. Vielmehr kann bereits eine statistisch signifikante Übereinstimmung oder ein Einfinden innerhalb vorgegebener Toleranzen ausreichend sein. Wiederum wird der Fachmann in Abhängigkeit von der geforderten Charakteristik den Bereich, in dem eine Übereinstimmung der optischen Flüsse bejaht wird, enger oder weiter festlegen.

Mit Vorteil schließt der erste Algorithmus Schritte ein zur Durchführung einer Filterung der Bildpunkte mittels eines Kalman-Filters. Die Funktionsweise und die Realisierung eines Kalman-Filters ist aus dem Stand der Technik hinlänglich bekannt und soll daher nicht näher erläutert werden. Die Randbedingungen, die in den Kalman-Filter eingebracht werden, sind vorzugsweise ein maximaler optischer Fluss und, sofern mehrere Momentaufnahmen ausgewertet werden, eine minimale beziehungsweise maximale Beschleunigung von Bildpunkten. Bildpunkte, die die vorgegebenen Bedingungen nicht erfüllen, also wahrscheinlich die Umgebung - aus den unterschiedlichsten Gründen - nicht zutreffend repräsentieren, werden vom Kalman-Filter gedämpft oder unterdrückt. Dies verbessert das Ergebnis bezüglich der Aufnahme neuer Referenzpunkte in die Beobachtungsmenge.

Bevorzugt schließt der erste Algorithmus Schritte ein zur Ermittlung mindestens einer Objektgruppe aus örtlich zusammenhängend positionierten Referenzpunkten. Dadurch lassen sich die Auswertungen, die Referenzpunkte einbeziehen, verbessern und erleichtern. Durch die Erzeugung von Objektgruppen ist es beispielsweise nicht mehr notwendig, viele einzelne Punkte zu vergleichen, sondern einen Formvergleich anzuwenden, wie er beispielsweise in Iterative Closest Point Algorithm, P. J. Besl and N. D. McKay (A method for registration of 3-D shapes. PAMI, 14(2):239-256, February 1992) beschrieben ist. Auch bekannte Verfahren zum Vergleich von Mengen, wie zum Beispiel RANSAC (M. A. Fischler, R. C. Bolles. Random Sample Consensus: A Paradigm for Model Fitting with Applications to Image Analysis and Automated Cartography. Comm. of the ACM, Vol 24, pp 381-395,1981) lassen sich einsetzen.

Mit Vorteil schließt der zweite Algorithmus Schritte ein zur Ermittlung permanent vorhandener, in ihrer Position unveränderter Referenzpunkte. Referenzpunkte, die über eine lange Zeit oder sogar immer gleich sind, haben nur eine geringe oder gar keine Aussagekraft, da es sich dabei regelmäßig um Teile des eigenen Fahrzeugs im Blickfeld der Bildgebungsvorrichtung oder aber um eine Verschmutzung im Bereich der Optik der Bildgebungsvorrichtung handelt. Sind bereits im Vorfeld Bildbereiche bekannt, die zu Referenzpunkten ohne Informationsgehalt führen können, so können diese Bereiche von der Bildauswertung grundsätzlich ausgenommen werden.

Vorteilhafter Weise schließt der zweite Algorithmus Schritte ein zur Ermittlung eines ersten optischen Flusses einer Mehrheit von Referenzpunkten gegenüber mindestens einem zweiten optischen Fluss einer Minderheit von Referenzpunkten. Die Begriffe der Mehrheit und Minderheit sind dabei nicht allein in zahlenmäßiger Hinsicht zu verstehen. So ist es vielmehr auch möglich, dass anhand einer höheren Gewichtung von Bildpunkten in bestimmten Bereichen oder von Referenzpunkten, die einer Objektgruppe angehören, auch denkbar, dass eine zahlenmäßig geringere Anzahl von Referenzpunkten im Sinne einer Mehrheit zu verstehen ist. Die vorgeschlagene Auswertung ist besonders vorteilhaft. Stellt sich nämlich während der Auswertung der Momentaufnahme heraus, dass eine große Anzahl von Referenzpunkten (beziehungsweise eine Anzahl hoch gewichteter Referenzpunkte) sich gegenüber einem anderen Teil der Referenzpunkte unterschiedlich bewegt, beispielsweise wenn der erste optische Fluss in etwa null ist und der zweite optische Fluss deutlich größer null, so ist anzunehmen, dass die Referenzpunkte, die den zweiten optischen Fluss aufweisen, zu einem bisher relativ zur Bilderfassungseinrichtung unbewegten Objekt gehören und nicht tatsächlich stationär sind. Diese als eigenbewegt erkannten Referenzpunkte werden aus der Beobachtungsmenge entfernt, und nur die weiterhin stationären Referenzpunkte werden weiter verfolgt.

Bei einer Weiterbildung der Erfindung schließt der zweite Algorithmus Schritte ein zur Durchführung einer Filterung der Referenzpunkte mittels einen Kalman-Filters. Hier können dem Kalman-Filter beispielsweise Randbedingungen zum Ausmaß tatsächlich zu erwartender Bewegungen von Referenzpunkten vorgegeben werden. Überschreitet beispielsweise die Bewegung eines Referenzpunktes einen vorgegebenen Schwellenwert nur einmalig oder lediglich kurzzeitig, so kann dies mittels des Kalman-Filters berücksichtigt und eine vorschnelle Entfernung des Referenzpunktes aus der Beobachtungsmenge verhindert werden.

Mit Vorteil wird zumindest ein Teil der Referenzpunkte der Beobachtungsmenge zu verschiedenen Zeitpunkten gespeichert und wird aus den gespeicherten Daten ein Verlauf der Referenzpunkte bestimmt. Damit kann beispielsweise überprüft werden, ob sich ein bestimmter Punkt je nach seiner Klassifikation in einem zu erwartenden Rahmen hinsichtlich Betrag und Richtung des optischen Flusses entwickelt hat. Die Auswertung der gespeicherten Daten kann ebenfalls dazu verwendet werden, das Ausscheiden eines Punktes (zum Beispiel eines eigenbewegten Objekts) aus der Beobachtungsmenge auszulösen. Dabei ist es auch möglich die gesamten Bildpunkte oder eine Auswahl in einem Kalman-Filter zu geben und dann mit dem Ergebnis des Filters die bisherige Punktmenge zu korrigieren. Nachfolgend können dann alle konsistenten Bildpunkte, also die Bildpunkte, deren Fluss erwartete Werte innerhalb der gesetzten Rahmenbedingungen aufweist, weiterverarbeitet werden.

Vorteilhafter Weise wird aus einem gleichen optischen Fluss einer Mehrheit der Referenzpunkte eine Winkeleigenbewegung der Bildgebungsvorrichtung beziehungsweise des Fahrzeugs errechnet. Findet eine kollektive Bewegung einer Mehrheit der Referenzpunkte in der Beobachtungsmenge statt, so lässt dies auf eine Winkeleigenbewegung der Bildgebungsvorrichtung beziehungsweise des Fahrzeugs schließen. Durch die Auswertung der kollektiven Bewegung können die Winkelanteile, Nick-, Gier- und Rollwinkel, ermittelt werden. Auch hier bieten sich die zuvor vorgeschlagenen Verfahren an, um eine Aussage treffen zu können, wann eine Mehrheit der Referenzpunkte sich gegenüber den anderen Referenzpunkten bewegt und den Schluss auf eine Winkeleigenbewegung zuzulassen. Prinzipbedingt sollte bei einer Winkeleigenbewegung der Bildgebungsvorrichtung eine gleichförmige Bewegung aller Referenzpunkte erfolgen, doch stellt sich dies aufgrund der hochdynamischen Rahmenbedingungen in der Praxis regelmäßig nicht ein. Es ist daher zweckmäßig und ausreichend für die jeweilige Applikation den geeigneten Schwellenwert und das geeignete Verfahren zur Ermittlung der Mehrheit zu bestimmen.

Es ist vorteilhaft, wenn eine Winkelbewegung der Bildgebungsvorrichtung beziehungsweise des Fahrzeugs anhand eines mathematischen Gleichungssystems beschrieben wird und eine Filterung der ermittelten Beobachtungsmengen im Zeitbereich Koeffizienten zur Berechnung der Winkeleigenbewegung ermittelt werden. Dadurch kann auf eine Auswertung und/oder Gewichtung einzelner Punkte verzichtet werden. Eine derartige Bestimmung der Winkeleigenbewegung lässt sich insbesondere mittels einen Kalman-Filters unterstützen.

Gemäß einer bevorzugten Ausgestaltung der Erfindung wird eine ermittelte Winkeleigenbewegung an Steuerfunktionen des Fahrzeugs weitergeleitet und wird von diesen bei der Bestimmung und/oder Durchführung von Steuereingriffen berücksichtigt. Unter dem Begriff "Steuern" ist dabei sowohl das Steuern ohne Rückkopplung als auch das Regeln mit Rückkopplung zu verstehen. Zu den Steuerfunktionen des Fahrzeugs gehören insbesondere Bremsfunktionen, wie Anti-Blockier-System oder Bremsunterstützung, sowie Stabilisationsfunktionen, wie eine elektronische Stabilitätskontrolle. Durch eine Berücksichtigung der zur Eigenbewegung des Fahrzeugs ermittelten Daten lassen sich die das Fahrverhalten des Fahrzeugs betreffenden Steuer- und/oder Regeleingriffe zielgenauer einsetzen. Dabei ist es insbesondere vorteilhaft, wenn die Winkeleigenbewegung an die Steuerfunktionen weitergeleitet wird.

Es ist vorteilhaft, wenn eine ermittelte Winkeleigenbewegung bei der Auswertung der optischen Flüsse dahingehend berücksichtigt wird, dass die optischen Flüsse um die auf der Winkeleigenbewegung beruhende Komponente bereinigt werden, um so im Wesentlichen rein translatorisch bedingte optische Flüsse zu erhalten. Abweichungen von diesen translatorischen Feld lassen auf eigenbewegte Objekte schließen. Zudem lassen sich anhand von Längenvergleichen im translatorischen Feld Tiefenstafflungen und/oder Objekte mit gleicher Bewegungsrichtung aber relativer Geschwindigkeit, wie dies beispielsweise bei einem überholenden Fahrzeug gegeben ist, ermitteln.

Die Erfindung betrifft ferner eine Vorrichtung zur Durchführung eines Verfahrens zur Bestimmung der Eigenbewegung eines Fahrzeugs in einer Umgebung, mit einer der Erfassung der Umgebung mittels Momentaufnahmen dienenden Bildgebungseinrichtung, mit einer Ermittlungseinrichtung zur Bestimmung des optischen Flusses anhand der Momentaufnahmen, mit einer Speichereinrichtung zur Speicherung einer Beobachtungsmenge von Referenzpunkten, die aus Sicht der Bildgebungsvorrichtung stationär scheinen, mit einer einen ersten Algorithmus realisierenden ersten Logikschaltung zur Bestimmung von der Beobachtungsmenge hinzuzufügenden Referenzpunkten und mit einer einen zweiten Algorithmus realisierenden zweiten Logikschaltung zur Bestimmung von aus der Beobachtungsmenge zu entfernenden Referenzpunkten.

### Zeichnungen

Die Erfindung wird nun anhand von Ausführungsbeispielen näher erläutert. Dabei zeigen
Figur 1 ein Verfahren zur Bestimmung der Eigenbewegung eines Fahrzeugs und
Figur 2 eine Vorrichtung zur Durchführung eines Verfahrens zur Bestimmung der Eigenbewegung eines Fahrzeugs.

### Beschreibung der Ausführungsbeispiele

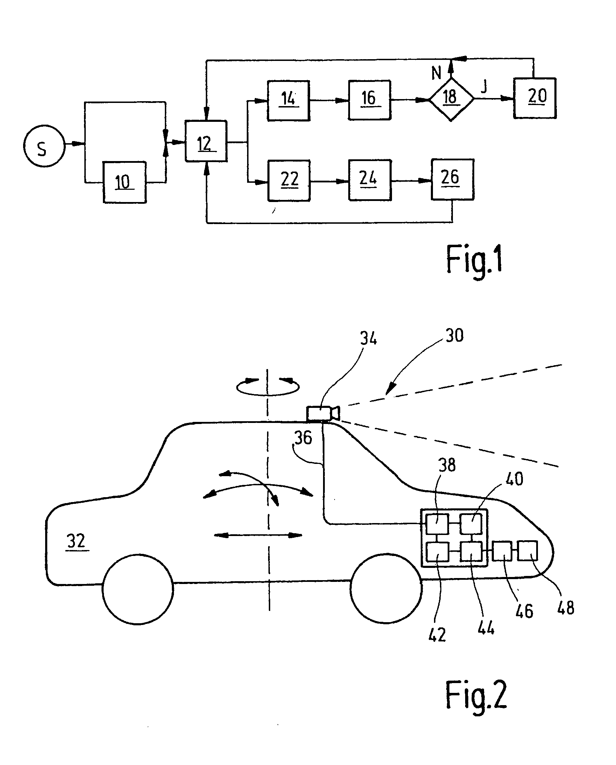

Figur 1 zeigt ein Verfahren zur Bestimmung der Eigenbewegung eines Fahrzeugs, insbesondere der Winkeleigenbewegung des Fahrzeugs. Das Verfahren wird, beispielsweise bei der Inbetriebnahme des Fahrzeugs, am Punkt S gestartet. Zunächst kann in einem optionalen Initialisierungsschritt 10 eine initiale Aufnahme der Umgebungsdaten erfolgen. Dazu zählt insbesondere die erste Berechnung eines optischen Flusses, das erste Erstellen von Referenzpunkten einer Beobachtungsmenge und die erste Bestimmung des kollektiven Flusses der Referenzpunkte. Unter dem Begriff des kollektiven Flusses ist eine gemittelte Betrachtung der einzelnen optischen Flüsse zu verstehen, mit der ein allgemeiner, gemeinsamer optischer Fluss von allen beziehungsweise zumindest einer Mehrzahl von Referenzpunkten beschrieben wird. In Abhängigkeit von der gewünschten Applikation, können verschieden Verfahren, wie zum Beispiel Mittelwert, Median, geometrisches Mittel, statistische und/oder stochastische Auswertungen, eingesetzt werden. Maßgeblich ist es dabei insbesondere, Aussagen ableiten zu können, welche Bildpunkte beziehungsweise Referenzpunkte tatsächlich stationär sind und welchen optischen Fluss diese stationären Punkte aufweisen. Der Initialisierungsschritt 10 ist nicht zwingend erforderlich, da insbesondere das Aufnehmen und das Entfernen von Referenzpunkten ein dynamisches Verfahren ist, welches alleine mittels der nachfolgend beschriebenen Verfahrensschritte durchgeführt werden kann.

Im Schritt 12 wird aus zwei Momentaufnahmen ein optischer Fluss berechnet. Verfahren zur Bestimmung des optischen Flusses sind in vielen Varianten bekannt und im Stand der Technik detailliert beschrieben. Die im Schritt 12 gewonnenen optischen Flussdaten können nun bevorzugt auf zwei verschiedene Weisen ausgewertet werden. Dabei können das erste Verarbeitungsverfahren mit den Schritten 14, 16 und 20 sowie mit dem Vergleichsschritt 18 und das zweite Verarbeitungsverfahren mit den Schritten 22, 24 und 26 sowohl einzeln als auch alternativ und bei entsprechenden Vorkehrungen auch kombiniert betrieben werden.

Im ersten Verarbeitungsverfahren wird im Kontrollschritt 14 zunächst eine Kontrolle bezüglich der Referenzpunkte (stationäre Punkte) durchgeführt. Das heißt, Bildpunkte, die als stationäre Punkte erkannt wurden, werden als Referenzpunkt in die Beobachtungsmenge aufgenommen; Referenzpunkte, die die Kriterien eines stationären Punktes nicht mehr erfüllen, werden aus der Beobachtungsmenge herausgenommen. In diesem Schritt kann auch die Ermittlung von örtlich zusammenhängend positionierten Referenzpunkten durchgeführt werden. Nach dem Kontrollschritt 14 wird im Schritt 16 der kollektive Fluss der Referenzpunkte ermittelt. Das Ergebnis des kollektiven Flusses wird im Vergleichsschritt 18 mit einem vorher ermittelten kollektiven Fluss verglichen. Falls noch keine Daten zu einem zuvor ermittelten kollektiven Fluss vorliegen, wird der neu ermittelte kollektive Fluss gegen einen Standardwert, insbesondere mit null, verglichen. Wird keine Änderung des kollektiven Flusses festgestellt, so wird das Verfahren über den Abzweig N fortgesetzt und führt dann zum bekannten Schritt 12 zurück. Wurde eine Änderung des kollektiven Flusses festgestellt, das heißt die Kamera und damit das Fahrzeug hat eine Winkeleigenbewegung durchgeführt, so zweigt das Verfahren über den Abzweig J zum Berechnungsschritt 20 ab, in dem mittels einer direkten Rechnung oder eine Kalman-Filters eine neue Winkeleigenbewegung errechnet wird Danach wird das Verfahren mit dem Schritt 12 fortgesetzt.

Gemäß dem zweiten Verarbeitungsverfahren werden die aus dem Schritt 12 gewonnenen optischen Flüsse im Schritt 22 mittels eines Kalman-Filters verarbeitet. In den Kalman-Filter sind dabei Daten eingegeben, die die reale Umgebung, aus der die Messwerte stammen, modellieren. Dies sei beispielhaft für die Nickbewegung eines Fahrzeugs erläutert. Für bestimmte Fahrzeuge in bestimmten Umgebungen kann beispielsweise angenommen werden, dass die Nickbewegung einen Wert von ± 2° und die Nickgeschwindigkeit einen Wert von ± 1°/Sekunde regelmäßig nicht überschreiten. Diese Information wird in den Kalman-Filter eingegeben, sodass bei darüber hinausgehenden Messwerten, insbesondere bei einer deutlichen Überschreitung, die Daten der entsprechenden Punkte gedämpft und/oder eliminiert werden. Die bereits aus dem ersten Verarbeitungsverfahren bekannte Kontrolle der Referenzpunkte wird im zweiten Verarbeitungsverfahren im Schritt 24 nun aufgrund der Daten aus der Kalman-Filterung gemäß Schritt 22 durchgeführt. Aus den Daten des Schrittes 22 wird dann im Schritt 26 die neue Winkeleigenbewegung errechnet, die bei fehlender Winkeleigenbewegung des Fahrzeugs gleich null ist. Die ermittelten neuen Winkeleigenbewegungen des ersten und/oder zweiten Verarbeitungsverfahrens werden an Steuereinheiten weitergeleitet, die im Fahrzeug angeordnet oder dem Fahrzeug zugeordnet sind.

Figur 2 zeigt eine Vorrichtung 30 zur Durchführung eines Verfahrens zur Bestimmung der Eigenbewegung eines Fahrzeugs 32. Die Vorrichtung weist eine Bildgebungseinrichtung 34 auf, die mittels Momentaufnahmen zumindest einen Teil der Umgebung des Fahrzeugs 32 erfasst. Die Bewegung des Fahrzeugs 32 ist anhand der Pfeile angedeutet. Die Bilddaten werden über eine Datenleitung 36 an eine Ermittlungseinrichtung 38 weitergeleitet, in der aus den Bilddaten der Momentaufnahmen die optischen Flüsse zumindest von ausgewählten Bildpunkten ermittelt werden. In einer Speichereinrichtung 40 können Daten gespeichert werden. Dabei wird es sich üblicherweise um eine temporäre Speicherung handeln, die sich auf Momentaufnahmen, einzelne Bildausschnitte, Bildpunkte, Referenzpunkte, Punktsgruppen, optische Flüsse oder auf sonstige Messdaten oder verarbeitete Daten beziehen kann. Der Ermittlungseinrichtung 38 und der Speichereinrichtung 40 sind eine erste Logikschaltung 42 und eine zweite Logikschaltung 44 zugeordnet. Mittels der ersten Logikschaltung 42 werden die Bilddaten dahingehend ausgewertet, in den Bilddaten der Momentaufnahmen stationärer Punkte ausfindig zu machen. Die zweite Logikschaltung dient in erster Linie dazu die Beobachtungsmenge hinsichtlich möglicherweise zu entfernender Referenzpunkte zu untersuchen. In der nachgelagerten Auswertevorrichtung 46 werden die gewonnenen Daten hinsichtlich einer Eigenbewegung, insbesondere einer Winkeleigenbewegung, ausgewertet. Bezüglich der Auswertung der Daten wird auf die vorstehenden Ausführungen verwiesen. Die von der Auswerteeinrichtung 46 ermittelten Daten werden in diesem Beispiel einer Steuereinrichtung 48 des Fahrzeugs 32, beispielsweise einer elektronischen Stabilitätskontrolle, zugeführt und von dieser bei der Berechnung von Regeleingriffen berücksichtigt.

## Patentansprüche

1. Verfahren zur Bestimmung der Eigenbewegung eines Fahrzeugs in einer Umgebung, wobei mittels einer am Fahrzeug fixierten Bildgebungsvorrichtung zumindest ein Teil der Umgebung mittels Momentaufnahmen erfasst wird, mindestens zwei Momentaufnahmen zur Bestimmung der optischen Flüsse von Bildpunkten ausgewertet werden, aus den optischen Flüssen Referenzpunkte ermittelt werden, die aus Sicht der Bildgebungsvorrichtung stationär scheinen, und die Referenzpunkte in einer Beobachtungsmenge gesammelt werden, **dadurch gekennzeichnet, dass** anhand eines ersten Algorithmus neue Referenzpunkte der Beobachtungsmenge dynamisch hinzugefügt werden und anhand eines zweiten Algorithmus bestehende Referenzpunkte aus der Beobachtungsmenge dynamisch entfernt werden.

2. Verfahren nach einem der vorhergehenden Ansprüche, **dadurch gekennzeichnet, dass** der erste Algorithmus Schritte einschließt zur Ermittlung von Bildpunkten deren optischer Fluss null oder nahezu null ist.

3. Verfahren nach einem der vorhergehenden Ansprüche, **dadurch gekennzeichnet, dass** der erste Algorithmus Schritte einschließt zur Ermittlung von Bildpunkten deren optischer Fluss dem optischen Fluss entspricht, der bei einer Mehrzahl von Referenzpunkten ermittelt wurde.

4. Verfahren nach einem der vorhergehenden Ansprüche, **dadurch gekennzeichnet, dass** der erste Algorithmus Schritte einschließt zur Durchführung einer Filterung der Bildpunkte mittels eines Kalman-Filters.

5. Verfahren nach einem der vorhergehenden Ansprüche, **dadurch gekennzeichnet, dass** der erste Algorithmus Schritte einschließt zur Ermittlung mindestens einer Objektgruppe aus örtlich zusammenhängend positionierten Referenzpunkten.

6. Verfahren nach einem der vorhergehenden Ansprüche, **dadurch gekennzeichnet, dass** der zweite Algorithmus Schritte einschließt zur Ermittlung permanent vorhandener, in ihrer Position unveränderter Referenzpunkte.

7. Verfahren nach einem der vorhergehenden Ansprüche, **dadurch gekennzeichnet, dass** der zweite Algorithmus Schritte einschließt zur Ermittlung eines ersten optischen Flusses einer Mehrheit von Referenzpunkten gegenüber mindestens einem zweiten optischen Fluss einer Minderheit von Referenzpunkten.

8. Verfahren nach einem der vorhergehenden Ansprüche, **dadurch gekennzeichnet, dass** der zweite Algorithmus Schritte einschließt zur Durchführung einer Filterung der Referenzpunkte mittels eines Kalman-Filters.

9. Verfahren nach einem der vorhergehenden Ansprüche, **dadurch gekennzeichnet, dass** zumindest ein Teil der Referenzpunkte der Beobachtungsmenge zu verschiedenen Zeitpunkten gespeichert wird und aus den gespeicherten Daten ein Verlauf der Referenzpunkte bestimmt wird.

10. Verfahren nach einem der vorhergehenden Ansprüche, **dadurch gekennzeichnet, dass** aus einem gleichen optischen Fluss einer Mehrheit der Referenzpunkte eine Winkeleigenbewegung der Bildgebungsvorrichtung beziehungsweise des Fahrzeugs errechnet wird.

11. Verfahren nach einem der vorhergehenden Ansprüche, **dadurch gekennzeichnet, dass** eine Winkeleigenbewegung der Bildgebungsvorrichtung beziehungsweise des Fahrzeugs anhand eines mathematischen Gleichungssystems beschrieben wird und durch eine Filterung der ermittelten Beobachtungsmengen im Zeitbereich Koeffizienten zur Berechnung der Winkeleigenbewegung ermittelt werden.

12. Verfahren nach einem der vorhergehenden Ansprüche, **dadurch gekennzeichnet, dass** eine ermittelte Eigenbewegung an Steuerfunktionen des Fahrzeugs weitergeleitet wird und von diesen bei der Bestimmung und/oder Durchführung von Steuereingriffen berücksichtigt wird.

13. Verfahren nach einem der vorhergehenden Ansprüche, **dadurch gekennzeichnet, dass** eine ermittelte Winkeleigenbewegung bei der Auswertung der optischen Flüsse dahingehend berücksichtigt wird, dass die optischen Flüsse um die auf der Winkeleigenbewegung beruhende Komponente bereinigt werden, um so im Wesentlichen rein translatorisch bedingte optische Flüsse zu erhalten.

14. Vorrichtung (30) zur Durchführung eines Verfahrens zur Bestimmung der Eigenbewegung eines Fahrzeugs (32) in einer Umgebung, insbesondere nach einem der vorhergehenden Ansprüche, mit einer der Erfassung der Umgebung mittels Momentaufnahmen dienenden Bildgebungseinrichtung (34), mit einer Ermittlungseinrichtung (38) zur Bestimmung des optischen Flusses anhand der Momentaufnahmen und mit einer Speichereinrichtung (40) zur Speicherung einer Beobachtungsmenge von Referenzpunkten, die aus Sicht der Bildgebungsvorrichtung stationär scheinen, **gekennzeichnet durch** eine einen ersten Algorithmus realisierende erste Logikschaltung (42) zur Bestimmung von der Beobachtungsmenge hinzuzufügenden Referenzpunkten und eine einen zweiten Algorithmus realisierende zweite Logikschaltung (44) zur Bestimmung von aus der Beobachtungsmenge zu entfernenden Referenzpunkten.

## Claims

1. Method for determining a vehicle's own movement in an environment, an imaging apparatus fixed on the vehicle being used to acquire at least a part of the environment by means of snapshots, at least two snapshots being evaluated in order to determine the optical flows of pixels, from which optical flows reference points are ascertained which appear to be stationary from the point of view of the imaging apparatus, and the reference points being collected in an observation set, **characterized in that** new reference points of the observation set are added dynamically with the aid of a first algorithm, and existing reference points are removed dynamically from the observation set with the aid of a second algorithm.

2. Method according to one of the preceding claims, **characterized in that** the first algorithm includes steps for ascertaining pixels whose optical flow is zero or virtually zero.

3. Method according to one of the preceding claims, **characterized in that** the first algorithm includes steps for ascertaining pixels whose optical flow corresponds to the optical flow which was ascertained for a plurality of reference points.

4. Method according to one of the preceding claims, **characterized in that** the first algorithm includes steps for carrying out filtering of the pixels by means of a Kalman filter.

5. Method according to one of the preceding claims, **characterized in that** the first algorithm includes steps for ascertaining at least one object group of spatially coherently positioned reference points.

6. Method according to one of the preceding claims, **characterized in that** the second algorithm includes steps for ascertaining permanently present reference points unaltered in their position.

7. Method according to one of the preceding claims, **characterized in that** the second algorithm includes steps for ascertaining a first optical flow of a majority of reference points as compared with at least a second optical flow of a minority of reference points.

8. Method according to one of the preceding claims, **characterized in that** the second algorithm includes steps for carrying out filtering of the reference points by means of a Kalman filter.

9. Method according to one of the preceding claims, **characterized in that** at least a portion of the reference points of the observation set are stored at various instants, and a profile of the reference points is determined from the stored data.

10. Method according to one of the preceding claims, **characterized in that** an angular movement of the imaging apparatus itself or of the vehicle itself is calculated from an identical optical flow of a majority of the reference points.

11. Method according to one of the preceding claims, **characterized in that** an angular movement of the imaging apparatus itself or of the vehicle itself is described with the aid of a system of mathematical equations, and coefficients for calculating the angular movement of the imaging apparatus itself or of the vehicle itself are ascertained by filtering the ascertained observation sets in the time domain.

12. Method according to one of the preceding claims, **characterized in that** an ascertained movement of the imaging apparatus itself or the vehicle itself is passed on to control functions of the vehicle and taken into account by the latter in the determination and/or carrying out of control interventions.

13. Method according to one of the preceding claims, **characterized in that** an ascertained angular movement of the imaging apparatus itself or the vehicle itself is taken into account in the evaluation of the optical flows to the effect that the optical flows are purged of the components based on the angular movement of the imaging apparatus itself or vehicle itself in order thus to obtain optical flows essentially conditioned in a purely translatory fashion.

14. Apparatus (30) for carrying out a method for determining a vehicle's (32) own movement in an environment, in particular according to one of the preceding claims, having an imaging apparatus (34) serving to acquire the environment by means of snapshots, having an ascertaining device (38) for determining the optical flow with the aid of the snapshots, and having a memory device (40) for storing an observation set of reference points which appear to be stationary from the point of view of the imaging apparatus, **characterized by** a first logic circuit (42), implementing a first algorithm, for determining reference points to be added to the observation set, and a second logic circuit (44), implementing a second algorithm, for determining reference points to be removed from the observation set.

## Revendications

1. Procédé pour déterminer le mouvement propre d'un véhicule dans un environnement, au moins une partie de l'environnement étant détectée à l'aide de clichés instantanés à l'aide d'un dispositif d'imagerie fixé au véhicule, au moins deux clichés instantanés étant analysés pour déterminer les flux optiques de points d'image, des points de référence étant calculés à partir des flux optiques paraissant stationnaires du point de vue du dispositif d'imagerie et les points de référence étant réunis en un ensemble observé, **caractérisé en ce que** de nouveaux points de référence de l'ensemble observé sont ajoutés de façon dynamique à l'aide d'un premier algorithme et que les points de référence existants sont retirés de façon dynamique de l'ensemble observé à l'aide d'un deuxième algorithme.

2. Procédé selon l'une quelconque des revendications précédentes, **caractérisé en ce que** le premier algorithme comprend des étapes de détermination de points d'image dont le flux optique est nul ou quasi nul.

3. Procédé selon l'une quelconque des revendications précédentes, **caractérisé en ce que** le premier algorithme comprend des étapes de détermination de points d'image dont le flux optique correspond au flux optique calculé pour une pluralité de points de référence.

4. Procédé selon l'une quelconque des revendications précédentes, **caractérisé en ce que** le premier algorithme comprend des étapes de réalisation d'un filtrage des points d'image à l'aide d'un filtre de Kalman.

5. Procédé selon l'une quelconque des revendications précédentes, **caractérisé en ce que** le premier algorithme comprend des étapes de détermination d'au moins un groupe d'objets à partir des points de référence positionnés en continu de façon localisée.

6. Procédé selon l'une quelconque des revendications précédentes, **caractérisé en ce que** le deuxième algorithme comprend des étapes de détermination de points de référence présents en permanence et ne changeant pas de position.

7. Procédé selon l'une quelconque des revendications précédentes, **caractérisé en ce que** le deuxième algorithme comprend des étapes de détermination d'un premier flux optique d'une majorité de points de référence par rapport à au moins un deuxième flux optique d'une minorité de points de référence.

8. Procédé selon l'une quelconque des revendications précédentes, **caractérisé en ce que** le deuxième algorithme comprend des étapes de réalisation d'un filtrage des points de référence à l'aide d'un filtre de Kalman.

9. Procédé selon l'une quelconque des revendications précédentes, **caractérisé en ce qu'**au moins une partie des points de référence de l'ensemble observé est mémorisée à des moments différents et qu'une courbe des points de référence est déterminée à partir des données mémorisées.

10. Procédé selon l'une quelconque des revendications précédentes, **caractérisé en ce qu'**un mouvement angulaire propre du dispositif d'imagerie est calculé par rapport au véhicule à partir d'un même flux optique d'une majorité de points de référence.

11. Procédé selon l'une quelconque des revendications précédentes, **caractérisé en ce qu'**un mouvement angulaire propre du dispositif d'imagerie par rapport au véhicule peut être décrit à l'aide d'un système d'équations mathématiques et que des coefficients de calcul du mouvement angulaire propre sont déterminés par filtrage des ensembles observés dans la plage de temps.

12. Procédé selon l'une quelconque des revendications précédentes, **caractérisé en ce qu'**un mouvement propre déterminé est acheminé aux fonctions de commande du véhicule et pris en compte par celles-ci lors de la détermination et/ou de la réalisation d'interventions de commande.

13. Procédé selon l'une quelconque des revendications précédentes, **caractérisé en ce qu'**un mouvement angulaire propre déterminé lors de l'analyse des flux optiques n'est pris en compte que si les flux optiques sont épurés des composants reposant sur le mouvement angulaire propre, pour ne conserver pour l'essentiel que les flux optiques de pure translation.

14. Dispositif (30) de réalisation d'un procédé pour déterminer le mouvement propre d'un véhicule (32) dans un environnement, notamment selon l'une quelconque des revendications précédentes, avec un dispositif d'imagerie (34) servant à déterminer l'environnement à l'aide de clichés instantanés, avec un dispositif de détermination (38) pour déterminer le flux optique à l'aide des clichés instantanés et avec un dispositif de mémorisation (40) pour mémoriser un ensemble observé de points de référence paraissant stationnaires du point de vue du dispositif d'imagerie, **caractérisé par** un premier circuit logique (42) réalisant un premier algorithme pour déterminer les points de référence à ajouter à l'ensemble observé et un deuxième circuit logique (44) réalisant un deuxième algorithme pour déterminer les points de référence à retirer de l'ensemble observé.
